# EUROPEAN PATENT SPECIFICATION

(11) **EP 3 407 033 B1**
(45) Date of publication and mention of the grant of the patent: **27.07.2022**
(21) Application number: 17172291.1
(22) Date of filing: 22.05.2017
(51) Int. Cl.: G01H 9/00

(54) **TRANSDUCER AND METHOD FOR CONVERTING MECHANICAL ENERGY TO LIGHT ENERGY**
WANDLER UND VERFAHREN ZUR UMWANDLUNG VON MECHANISCHER ENERGIE IN LICHTENERGIE
TRANSDUCTEUR ET PROCÉDÉ DE CONVERSION D'ÉNERGIE MÉCANIQUE EN ÉNERGIE LUMINEUSE

(43) Date of publication of application: 28.11.2018
(73) Proprietor: Vestel Elektronik Sanayi ve Ticaret A.S., 45030 Manisa (TR); Özyegin University, 34794 Istanbul (TR)
(72) Inventor: GULBAHAR, Burhan, 45030 Manisa (TR); MEMISOGLU, Gorkem, 45030 Manisa (TR)
(74) Representative: Flint, Adam

(56) References cited:
- WO-A1-2015/061460
- US-A1- 2017 020 441
- GULBAHAR BURHAN ET AL: "Nanoscale optical communications modulator and acousto-optic transduction with vibrating graphene and resonance energy transfer", 2017 IEEE INTERNATIONAL CONFERENCE ON COMMUNICATIONS (ICC), IEEE, 25 May 2017 (2017-05-25), pages 1-7, XP033132910, DOI: 10.1109/ICC.2017.7997036 [retrieved on 2017-07-28]
- Burhan Gulbahar ET AL: "CSSTag: Optical Nanoscale Radar and Particle Tracking for In-Body and Microfluidic Systems with Vibrating Graphene and Resonance Energy Transfer", , 4 September 2017 (2017-09-04), pages 1-13, XP055405824, Retrieved from the Internet: URL:https://arxiv.org/abs/1709.00907v1 [retrieved on 2017-09-12]

## Description

### Technical Field

The present disclosure relates to a transducer and method for converting mechanical energy to light energy.

### Background

A number of techniques and devices for converting mechanical energy to light energy are known. As a particular example, techniques and devices for converting mechanical energy in the form of sound energy, or sound waves, to light energy are known. However, the known techniques and devices for converting mechanical energy to light energy, including for converting sound energy in particular to light energy, have various problems and limitations.

US2017/020441A1 discloses methods and apparatus to form a biometric-based information communication system. In an example, an ophthalmic lens has event coloration mechanisms. The event mechanisms may include a reactive molecule, which may comprise a binding portion flanked by Forster resonance energy transfer (FRET) pairs.

### Summary

According to a first aspect disclosed herein, there is provided a transducer for converting mechanical energy to light energy according to claim 1.

According to a second aspect disclosed herein, there is provided a method of converting mechanical energy to light energy according to claim 10. Advantageous embodiments of the invention are described in the dependent claims.

### Brief Description of the Drawings

To assist understanding of the present disclosure and to show how embodiments may be put into effect, reference is made by way of example to the accompanying drawings in which:
Figure 1 shows a schematic perspective view of an example of a transducer;
Figure 2 shows a schematic side view of an example of a transducer;
Figure 3 shows schematically an example of movement of a donor molecule and a donor molecule substrate;
Figure 4 shows schematically an example of movement of a donor molecule; and
Figure 5 shows schematically an example of movement of a donor molecule over acceptor molecules and the intensity of the light emitted by the acceptor molecules.

### Detailed Description

By way of introduction first, reference is made to the known "Forster Resonance Energy Transfer" (FRET). In FRET, energy is transferred from a first light-sensitive molecule (the "donor" molecule) to a second light-sensitive molecule (the "acceptor" molecule). The donor molecule is initially in an electronic excited state, and may be put into that excited state by light that is incident on the donor molecule. When the donor molecule is sufficiently close to the acceptor molecule, energy of the excited donor molecule is transferred to the acceptor molecule through non-radiative dipole-dipole coupling. The acceptor molecule may then emit light as a result. The efficiency of the energy transfer from the donor molecule to the acceptor molecule is inversely proportional to the sixth power of the distance between the donor molecule and the acceptor molecule. This means that FRET is extremely sensitive to small changes in distance between the donor molecule and the acceptor molecule. The distance between the donor molecule and the acceptor molecule for FRET to take place is much less than the wavelength of the light that is transferred, and may be in the range of for example 1 to 10nm or so.

In some examples described herein, a transducer is provided for converting mechanical energy to light energy. The transducer has at least one molecule of a first type and a plurality of molecules of a second type. The molecules of the first and second types are capable of energy transfer according to FRET. One of the first type and second type of molecule is a donor molecule and the other of the first type and second type of molecule is an acceptor molecule. The molecules of the second type are spaced from each other. The molecule of the first type is movable across the molecules of the second type in sequence. This enables energy transfer according to FRET between the molecule of the first type and the molecules of the second type in sequence thereby to cause the acceptor molecule or molecules to emit light. That is, the molecule of the first type is movable so as to traverse the molecules of the second type in sequence. The movement may in effect be a back-and-forth or reciprocating movement of the molecule. In the case that the first type of molecule is a donor molecule and the second type of molecule is an acceptor molecule, movement of the donor molecule across the acceptor molecules in sequence causes the acceptor molecules to emit light in sequence.

Referring now to the drawings, examples of a transducer according to embodiments will be described.

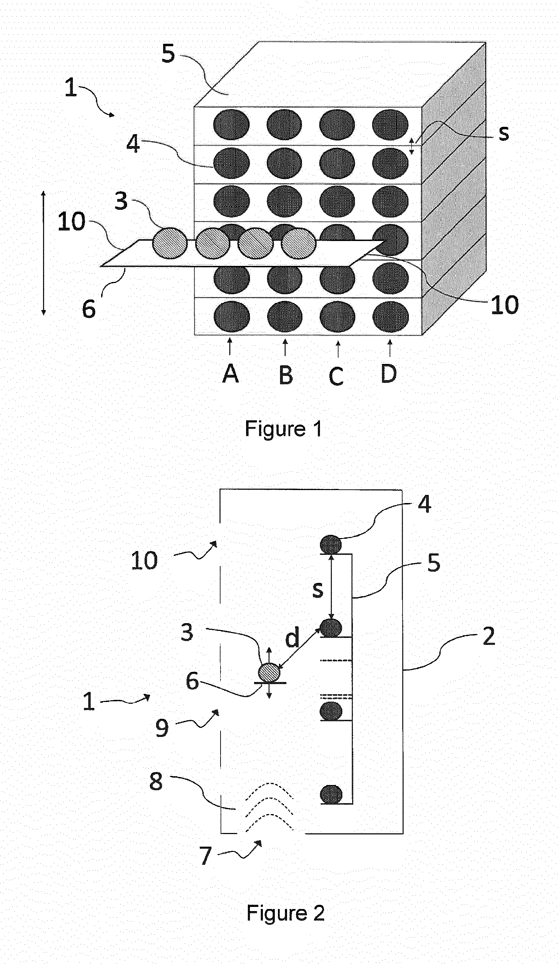

Figure 1 shows a schematic perspective view and Figure 2 shows a schematic side view of an example of a transducer 1. The figures are not to scale and each shows only a portion of the transducer 1. The transducer 1 has a container or housing 2 for containing the operative parts of the transducer 1. The housing 2 is preferably formed of a strong material that is also light weight and is capable of withstanding operation at high temperatures. A number of plastics or metals are suitable for example. A preferred material is graphene. Graphene is formed of one or more layers of carbon atoms arranged in a repeating hexagonal pattern and is known to be a very strong, lightweight and durable material despite having atomic level thickness, and is capable of withstanding operation or use at high temperatures. Other so-called 2D topological materials or "single layer" materials may be used. The housing 2 is not indicated in other figures for reasons of clarity.

The transducer 1 has at least one molecule 3 of a first type and a plurality of molecules 4 of a second type. The molecules 3, 4 of the first and second types are capable of energy transfer according to Förster Resonance Energy Transfer (FRET). Accordingly, one of the first type and second type of molecule is a donor molecule and the other of the first type and second type of molecule is an acceptor molecule. That is, the molecule 3 of the first type may be a donor molecule and the molecules 4 of the second type may be acceptor molecules or vice versa. Whether the molecule 3 of the first type is a donor molecule or an acceptor molecule and, correspondingly, the molecules 4 of the second type are acceptor molecules or donor molecules is a design choice, depending on for example the properties required of the transducer 1 and on manufacturing convenience. For convenience and brevity, reference will be made herein to the molecule(s) 3 of the first type being a donor molecule(s) 3 and the molecules 4 of the second type being acceptor molecules 4, it being understood that the roles may be reversed in other examples.

Adjacent pairs of acceptor molecules 4 are spaced from each other by a spacing or separation s. The donor molecule 3 is movable across the acceptor molecules 4 in sequence, as indicated by arrows in Figures 1 and 2. The separation s between pairs of adjacent acceptor molecules 4 may be the same or may be different. The separation s between adjacent acceptor molecules 4 may be determined so as to achieve desired properties for the light that is emitted by the acceptor molecules 4, as discussed further below. The separation s is preferably greater than the average Förster radius, i.e. greater than around 10 nm, in order to create independent resonance energy transfer floors or layers in the transducer 1.

Referring particularly to Figure 2, there may be plural sets of acceptor molecules 4, with four sets being shown by way of example and indicated by A, B, C, D. Within each set, the acceptor molecules 4 are arranged linearly in this example. Other non-linear arrangements, for some or all of the sets, may be used, depending on for example the properties required of the transducer 1. A respective donor molecule 3 is provided for each set of acceptor molecules 4. The separation s between pairs of adjacent acceptor molecules 4 within a set may be the same or may be different. The separation s between pairs of adjacent acceptor molecules 4 may be the same or may be different across different sets A, B, C, D... of acceptor molecules 4. Thus, there may be a single set of acceptor molecules 4 and a single donor molecule 3 or plural sets of acceptor molecules 4 and a corresponding number of donor molecules 3. In some examples, there may be plural donor molecules 3 for moving across a single set of acceptor molecules 4. In the following, the description will largely be in terms of one donor molecule 3 moving across one set of acceptor molecules 4 for convenience and brevity.

The acceptor molecules 4 are supported or carried by a substrate 5. The acceptor molecule substrate 5 is preferably formed of a strong material that is also light weight and is capable of withstanding operation at high temperatures. A number of plastics or metals are suitable for example. However, a preferred material is a so-called 2D topological material or "single layer" material. Examples include graphene, MoS₂, black phosphorus or phosphorene, etc.

The donor molecule 3 is supported or carried by another substrate 6. Where there are plural donor molecules 3, they may be provided on their own separate substrates 6, or two or more, and in some examples all, of the donor molecules 3 may be provided on the same substrate 6.

The donor molecule substrate 6 is movable so as to move the donor molecule 3 across the acceptor molecules 4 in sequence. In an example, the transducer 1 is arranged so that the donor molecule substrate 6 is movable by an incoming pressure wave, such as a sound wave. For example, the housing 2 may have an opening 7 arranged generally along the direction of movement of the donor molecule substrate 6 to admit a sound wave 8 into the housing 2 to bear on the donor molecule substrate 6.

The transducer 1 is arranged so that light can be incident on the donor molecule 3. Depending on the material of the donor molecule 3 and/or specific requirements, the light may be ambient light, which means that the transducer 1 requires no power and may be a passive device. Alternatively or additionally, the incident light may be from a specific light source (not shown) which may be electrically powered for example. The transducer 1 in this example has one or more entrance windows 9 for admitting light to be incident on the donor molecule 3. The light that is incident on the donor molecule 3 causes the donor molecule 3 to transition to an electronic excited state.

As the donor molecule substrate 6 moves, the donor molecule 3 is driven to move across the acceptor molecules 4 in sequence. As discussed above, when the electronically excited donor molecule 3 is sufficiently close to an acceptor molecule 4, such as within a distance of for example 1 to lOnm or so, energy transfer according to FRET takes place. That is, once the distance d between the donor molecule 3 and an acceptor molecule 4 is less than the minimum distance required for FRET, energy is transferred by the donor molecule 3 emitting a photon that is accepted by the corresponding acceptor molecule 4. When the acceptor molecule 4 receives or accepts the photon emitted by the donor molecule, the acceptor molecule 4 enters an electron excited state. (In fact, FRET is analogous to near-field communication, in that the radius of interaction is much smaller than the wavelength of light emitted. As such, the photon that is emitted by the donor molecule 3 is a virtual photon which is instantly absorbed by a receiving acceptor molecule 4.) Subsequently, and typically practically instantaneously, the acceptor molecule 4 spontaneously relaxes to a lower state or a rest state by emitting a (real) photon. The photon emitted by the acceptor molecule 4 leaves the housing 2 through an exit window 10. There may be one or more exit windows 10. For example, there may be one exit window 10 for each acceptor molecule 4. At least one window may be both an entrance window for admitting light and an exit window for allowing generated light to exit the housing 2. The housing 2 may be for example entirely open or transparent to light (at least at the relevant frequencies) at least along one side or entirely. The important thing is that light can enter the housing 2 and can leave the housing 2. As in this example a sound wave 8 is used to drive the movement of the donor molecule 3, the transducer 1 may be regarded as an acousto-optic transducer.

This arrangement has a number of advantages in this respect. The transducer 1 may be manufactured at approximately nanoscale dimensions. The sensitivity of the transducer 1 to different volumes (amplitudes) of sound may be set or varied by for example setting or varying the maximum and/or minimum separation between the donor molecule 3 and the acceptor molecules 4 as the donor molecule 3 moves across the acceptor molecules 4.

In an example, the substrate 6 for the donor molecule 3 is elastically deformable. That is, the donor molecule substrate 6 may be resilient so as to flex and return to its rest position on application and removal of a force, such as by a sound wave entering the transducer 1. The donor molecule substrate 6 may be a membrane, that is, a pliable sheet-like structure. The donor molecule substrate 6 may be formed of a metal or plastics for example. However, a preferred material is a so-called 2D topological material or "single layer" material. Examples include graphene, MoS₂, black phosphorus or phosphorene, etc. Graphene is formed of one or more layers of carbon atoms arranged in a repeating hexagonal pattern and is known to be a very strong, lightweight and durable material despite having atomic level thickness, and is capable of withstanding operation or use at high temperatures, and so is particularly suitable for the donor molecule substrate 6.

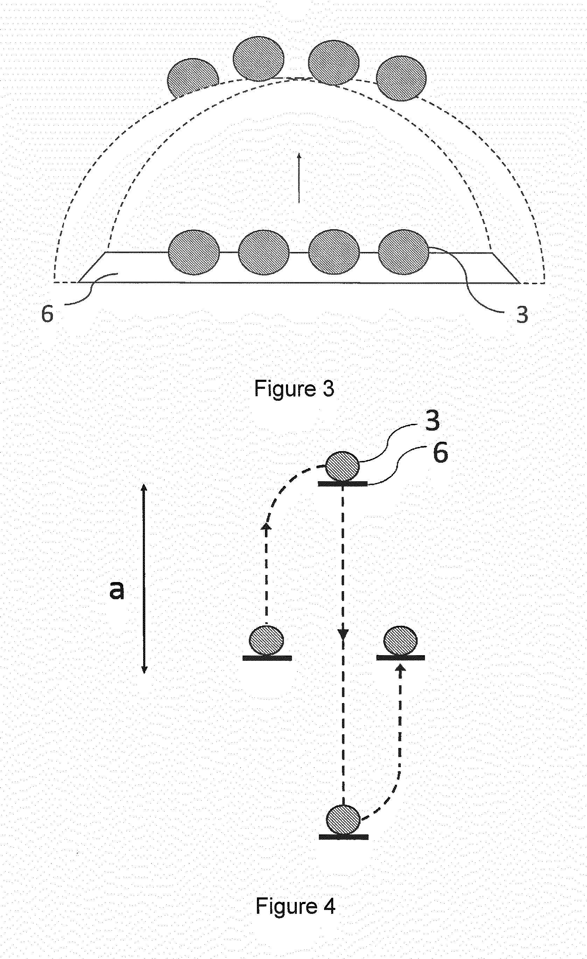

The donor molecule substrate 6 may be fixed at opposed edges 10, for example by fixing the opposed edges 10 to the housing 2. The effect of this on the donor molecule substrate 6 is shown schematically in Figures 3 and 4. As a pressure wave, such as a sound wave, bears on the donor molecule substrate 6, the donor molecule substrate 6 flexes or bows at the centre, as indicated by arrows. Then, owing to the resilience of the donor molecule substrate 6, the donor molecule substrate 6 returns to its rest position and then continues to move so as to bow in the opposite direction. The result of this is that the movement of the donor molecule substrate 6 in this example is a reciprocating back-and-forth bowing of the body or centre of the donor molecule substrate 6. The amplitude *a* of the movement will be determined by the material and dimensions of the donor molecule substrate 6, as well as by the amplitude and frequency of the incoming sound wave, and so can be controlled accordingly.

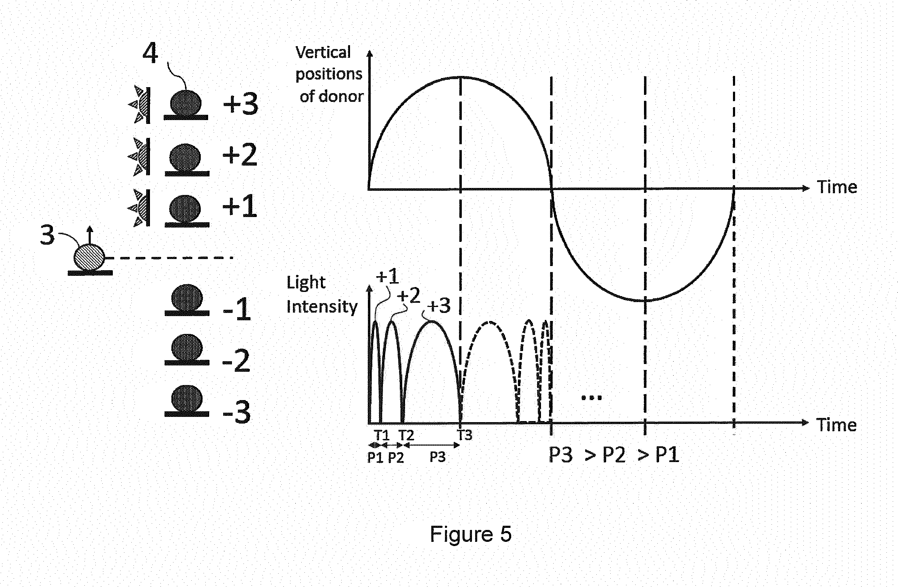

The effect of this on the light emitted by the acceptor molecules 4 will be discussed with reference to Figure 5. The left hand side of Figure 5 shows schematically a donor molecule 6 moving back and forth over a succession of spatially separated acceptor molecules 4. In this example, there are six acceptor molecules 4 which are numbered -3, -2, -1, +1, +2, +3, with no acceptor molecule 4 at the base or zero location. More or fewer acceptor molecules 4 may be provided in other examples and there may be an acceptor molecule 4 at the base or zero location in other examples. The right hand side of Figure 5 illustrates at the top the displacement of the donor molecule 3 from its rest position with respect to time and at the bottom the corresponding intensity of light that is emitted by the acceptor molecules 4 with respect to time.

Starting at time zero, the donor molecule substrate 6 is at its rest position and is driven by an incoming sound wave and so moves the donor molecule 3 towards the acceptor molecule 4 at position +1. When the donor molecule 3 is close enough to the acceptor molecule 4 at position +1, FRET takes place, resulting in the acceptor molecule 4 at position +1 emitting light. The donor molecule 3 continues moving and so moves away from the acceptor molecule 4 at position +1, which stops emitting light. Continued movement of the donor molecule 3 brings the donor molecule 3 close to the acceptor molecule 4 at position +2, such that FRET takes place and light is emitted by the acceptor molecule 4 at position +2. In this example, the donor molecule 3 continues to move in the same direction such that the acceptor molecule 4 at position +2 and then the acceptor molecule 4 at position +3 is caused to emit light. At this point in this example, the movement of the substrate 6 and the donor molecule 3 ceases and the resilience of the substrate 6 drives the substrate 6 and the donor molecule back in the opposite direction, back towards the rest or zero position. The substrate 6 continues to move in that direction, and so is brought into proximity to the acceptor molecules 4 at positions -1, -2, -3 in turn, which therefore emit light in turn. The reciprocating movement of the substrate 6 may continue so as to drive the donor molecule 3 back and forth over the acceptor molecules 4, at least until for example friction or damping losses or the like cause the substrate 6 to cease its reciprocating movement and/or another sound wave is incident on the substrate 6 to begin another process of movement back and forth.

The reciprocating movement of the substrate 6 and therefore the donor molecule 3 means that the donor molecule 3 is moving with a high speed when near the rest or zero position, and its speed drops to zero at the extremes of the movement of the substrate 6. (In the ideal case, this is in effect a simple harmonic oscillator motion, though in practice will be a damped oscillator motion.) The result of this on the intensity of the light that is emitted can be seen in the graph at the bottom of the right hand side of Figure 5. It will be seen immediately that the width or period P of the pulses of light emitted in turn by the acceptor molecules 4 varies, from a minimum of PI for the acceptor molecule 4 at positions -1 and +1 to a minimum of P3 for the acceptor molecule 4 at positions -3 and +3. That is, the intensity of the light that is emitted by the acceptor molecules 4 is modulated. In the ideal case (with no losses due to damping, etc.), the modulation frequency is 2N_{A} × *f* where N_{A} is the number of acceptor molecules 4 over which the donor molecule 3 passes and *f* is the mechanical resonant frequency of the donor molecule substrate 6, the factor 2 arising because the donor molecule 3 moves over each acceptor molecule twice in a cycle. It may be noted that if the amplitude of movement of the donor molecule substrate 6 is large, particularly much larger than the minimum distance required for FRET to take place (which is typically around 1 to 10nm as discussed above), then there may be a correspondingly large number NA of acceptor molecules 4 over which the donor molecule 3 moves, resulting in a high modulation frequency. As mentioned, the separation s between adjacent pairs of acceptor molecules 4 is preferably greater than the average Forster radius, i.e. greater than around 10 nm, in order to create independent resonance energy transfer floors or layers in the transducer 1. However, as the separation s increases, the resulting modulation frequency decreases, and so there is a balance to be made. In any event, this arrangement operates in effect as a frequency multiplier, on a nanometre scale, which is beneficial for a number of applications.

The donor molecule 3 may be the same type of molecule as the acceptor molecule 4, in which case they will (normally) emit light of the same wavelength. Alternatively, the donor molecules 3 and acceptor molecules 4 may be of different types, in which case they will typically emit light of different wavelengths. The type of molecule of the acceptor molecule 4 may be selected so as to produce a desired wavelength for the emitted light. Where plural sets of acceptor molecules 4 A, B, C, D... and corresponding donor molecules 3 are provided, the sets of acceptor molecules 4 A, B, C, D... may in general all be of the same type of material or different materials and the corresponding donor molecules 3 may in general all be of the same type of material or different materials.

Where plural sets of acceptor molecules 4 A, B, C, D... and corresponding donor molecules 3 are provided, the sets of acceptor molecules 4 A, B, C, D... may be of different materials which are selected so that the different sets of acceptor molecules emit light of different wavelengths.

At least one of the donor molecule 3 and the acceptor molecules 4 may be an inorganic compound of a group 12 element with a group 16 element (in other words, a compound of a group IIB element with a group VIB element under the former IUPAC group IUPAC group nomenclature). Such II-VI compounds have desirable optical properties, which can be engineered to suit different applications. As particular examples, the inorganic compound may be selected from a group consisting of cadmium sulphide, cadmium selenide, zinc sulphide and zinc selenide.

Alternatively or additionally, at least one of the donor molecule 3 and the acceptor molecules may be an organic compound. This has the advantage of allowing the acousto-optic transducer 1 to be used in biochemical, biomedical, genetic and other bioengineering applications. As particular examples, the organic compound may be selected from a group consisting of a fluorescent protein and a rylene dye.

At least one of the donor molecule 3 and the acceptor molecules 4 may be in the form of a quantum dot. A quantum dot is a nanoscale particle having quantum properties, which may include their optical and/or electronic properties, which differ from the properties of particles made of similar materials, but at larger scales, as a result of quantum effects. Thus, for example, at least one of the donor molecule 3 and the acceptor molecules may be coated onto a nanoscale particle or otherwise embodied as a quantum dot, and the optical properties of the donor molecule 3 and/or of the acceptor molecule 4 may be varied according to choice, by adjusting one or more properties of the nanoscale particles, such as their size and/or shape.

The window or windows 9, 10 may be provided with a filter and/or a lens. These allow the properties of the light incident on the donor molecule 4 and the light emitted by the acceptor molecules 4 to be controlled accordingly.

Examples of transducers 1 as described herein may be used in a number of applications. This includes for example energy harvesting, by which the energy from a sound wave is converted into light energy which in turn may be converted into electric energy by the photoelectric effect if caused to be incident on a suitable material. The transducers 1 as described herein may be used in nanoscale communication; in nanoscale networks; in biomedical nanoscale systems; as a sensor with acousto-optic sensing capability; in visible light communication, to improve the modulated light frequency; in nano photonics chips; in conjunction with LEDs to improve their modulation speeds; etc. Another application is for lighting effects, where for example the incident sound wave is music and the transducer 1 can produce lighting effects that mirror or follow the changing music (it being understood that the light emitted by the acceptor molecules 4 would typically be in the visible and/or ultra violet part of the spectrum in such an application).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed. The scope of the invention is defined in the claims.

## Claims

1. A transducer (1) for converting mechanical energy to light energy, the transducer (1) comprising:
at least one molecule of a first type (3); and
at least one molecule of a second type (4);
the molecules of the first and second types (3,4) being capable of energy transfer according to Forster Resonance Energy Transfer wherein one of the first type and second type of molecule is a donor molecule (3) and the other of the first type and second type of molecule is an acceptor molecule (4); **characterised in that**:
the transducer (1) comprises a plurality of molecules of the second type (4), the molecules of the second type (4) being spaced from each other; and by:
the transducer (1) being arranged such that the molecule of the first type (3) is movable across the molecules of the second type (4) in sequence so as to enable energy transfer according to Forster Resonance Energy Transfer between the molecule of the first type (3) and the molecules of the second type (4) in sequence thereby to cause the acceptor molecule or molecules to emit light.

2. A transducer (1) according to claim 1, wherein the first type of molecule is a donor molecule (3) and the second type of molecule is an acceptor molecule (4), whereby movement of the donor molecule (3) across the acceptor molecules (4) in sequence causes the acceptor molecules (4) to emit light in sequence.

3. A transducer (1) according to claim 1 or claim 2, comprising a substrate (6) on which the molecule of the first type (3) is carried, the substrate (6) being movable so as to move the molecule of the first type (3) across the molecules of the second type (4) in sequence.

4. A transducer (1) according to claim 3, wherein the substrate (6) is elastically deformable.

5. A transducer (1) according to claim 4, wherein two opposed edges (10) of the substrate (6) are fixed against movement in the transducer (1) such that movement of the substrate (6) is a reciprocating, bowing back-and-forth of the body of the substrate (6).

6. A transducer (1) according to any of claims 3 to 5, wherein the transducer (1) comprises a housing (2) in which the substrate (6) is located, the housing (2) having an opening (7) for admitting a pressure wave (8) which in use drives movement of the molecule of the first type (3).

7. A transducer (1) according to claim 6, the housing (2) comprising at least one window (9) for admitting light for exciting the or each donor molecule (3).

8. A transducer (1) according to claim 6 or claim 7, the housing (2) comprising at least one window (10) for allowing light generated by the or each acceptor molecule (4) to exit the housing (2).

9. A transducer (1) according to any of claims 1 to 8, comprising plural molecules of the first type (3).

10. A method of converting mechanical energy to light energy, the method comprising:
moving a molecule of a first type (3) across molecules of a second type (4) in sequence, wherein the molecules of the first and second types (3, 4) are capable of energy transfer according to Forster Resonance Energy Transfer wherein one of the first type and second type of molecule is a donor molecule (3) and the other of the first type and second type of molecule is an acceptor molecule (4), and wherein the molecules of the second type (4) are spaced from each other, whereby the moving the molecule of the first type (3) moves the molecule of the first type (3) across the molecules of the second type (4) in sequence so as to enable energy transfer according to Forster Resonance Energy Transfer between the molecule of the first type (3) and the molecules of the second type (4) in sequence, thereby to cause the acceptor molecule or molecules to emit light.

11. A method according to claim 10, wherein the first type of molecule is a donor molecule (3) and the second type of molecule is an acceptor molecule (4), whereby moving the donor molecule (3) across the acceptor molecules (4) in sequence causes the acceptor molecules (4) to emit light in sequence.

12. A method according to claim 10 or claim 11, wherein the molecule of the first type (3) is carried on a substrate (6) and the moving comprises moving the substrate (6) so as to move the molecule of the first type (3) across the molecules of the second type (4) in sequence.

13. A method according to claim 12, wherein the substrate (6) is moved by a sound wave (8) incident on the substrate (6).

14. A method according to claim 12 or claim 13, wherein the substrate (6) is elastically deformable and two opposed edges (10) of the substrate (6) are fixed against movement in the transducer (1) such that movement of the substrate (6) is a reciprocating, bowing back-and-forth of the body of the substrate (6).

15. A method according to any of claims 10 to 14, wherein plural molecules of the first type (3) are moved across molecules of the second type (4) in sequence.

## Patentansprüche

1. Wandler (1) zum Umwandeln mechanischer Energie in Lichtenergie, wobei der Wandler (1) aufweist:
wenigstens ein Molekül einer ersten Art (3); und
wenigstens ein Molekül einer zweiten Art (4);
wobei die Moleküle der ersten und zweiten Arten (3, 4) zur Energieübertragung gemäß Förster-Resonanzenergietransfer fähig sind, wobei eine der ersten und zweiten Molekülart ein Donormolekül (3) ist und die andere der ersten und zweiten Molekülart ein Akzeptormolekül (4) ist; **dadurch gekennzeichnet, dass** :
der Wandler (1) mehrere Moleküle der zweiten Art (4) aufweist, wobei die Moleküle der zweiten Art (4) voneinander beabstandet sind; und
der Wandler (1) so arrangiert ist, dass das Molekül der ersten Art (3) der Reihe nach über die Moleküle der zweiten Art (4) bewegbar ist, um eine Energieübertragung gemäß Förster-Resonanzenergietransfer zwischen dem Molekül der ersten Art (3) und den Molekülen der zweiten Art (4) der Reihe nach zu ermöglichen, um dadurch zu bewirken, dass das oder die Akzeptormolekül(e) Licht emittieren.

2. Wandler (1) nach Anspruch 1, bei welchem die erste Molekülart ein Donormolekül (3) ist und die zweite Molekülart ein Akzeptormolekül (4) ist, wodurch eine Bewegung des Donormoleküls (3) der Reihe nach über die Akzeptormoleküle (4) bewirkt, dass die Akzeptormoleküle (4) der Reihe nach Licht emittieren.

3. Wandler (1) nach Anspruch 1 oder Anspruch 2, aufweisend ein Substrat (6), auf dem das Molekül der ersten Art (3) getragen wird, wobei das Substrat (6) beweglich ist, um das Molekül der ersten Art (3) der Reihe nach über die Moleküle der zweiten Art (4) zu bewegen.

4. Wandler (1) nach Anspruch 3, bei welchem das Substrat (6) elastisch verformbar ist.

5. Wandler (1) nach Anspruch 4, bei welchem zwei gegenüberliegende Kanten (10) des Substrats (6) gegen eine Bewegung im Wandler (1) derart befestigt sind, dass die Bewegung des Substrats (6) eine hin- und hergehende, den Körper des Substrats (6) hin- und herbiegende ist.

6. Wandler (1) nach einem der Ansprüche 3 bis 5, wobei der Wandler (1) ein Gehäuse (2) aufweist, in dem sich das Substrat (6) befindet, wobei das Gehäuse (2) eine Öffnung (7) zum Einlassen einer Druckwelle (8) hat, die im Gebrauch die Bewegung des Moleküls der ersten Art (3) antreibt.

7. Wandler (1) nach Anspruch 6, bei welchem das Gehäuse (2) wenigstens ein Fenster (9) zum Lichteinlassen zum Anregen des oder jedes Donormoleküls (3) aufweist.

8. Wandler (1) nach Anspruch 6 oder Anspruch 7, wobei das Gehäuse (2) wenigstens ein Fenster (10) aufweist, um zu ermöglichen, dass Licht, das durch das oder jedes Akzeptormolekül (4) erzeugt wird, aus dem Gehäuse (2) austritt.

9. Wandler (1) nach einem der Ansprüche 1 bis 8, aufweisend mehrere Moleküle der ersten Art (3).

10. Verfahren zum Umwandeln mechanischer Energie in Lichtenergie, wobei das Verfahren aufweist:
Bewegen eines Moleküls einer ersten Art (3) der Reihe nach über Moleküle einer zweiten Art (4), wobei die Moleküle der ersten und zweiten Arten (3, 4) zur Energieübertragung gemäß Förster-Resonanzenergietransfer fähig sind, wobei eine der ersten und zweiten Molekülart ein Donormolekül (3) ist und die andere der ersten und zweiten Molekülart ein Akzeptormolekül (4) ist, und wobei die Moleküle der zweiten Art (4) voneinander beabstandet sind, wodurch das Bewegen des Moleküls der ersten Art (3) das Molekül der ersten Art (3) der Reihe nach über die Moleküle der zweiten Art (4) bewegt, um eine Energieübertragung gemäß Förster-Resonanzenergietransfer zwischen dem Molekül der ersten Art (3) und den Molekülen der zweiten Art (4) der Reihe nach zu ermöglichen, um dadurch zu bewirken, dass das oder die Akzeptormolekül(e) Licht emittieren.

11. Verfahren nach Anspruch 10, bei welchem die erste Molekülart ein Donormolekül (3) ist und die zweite Molekülart ein Akzeptormolekül (4) ist, wodurch eine Bewegung des Donormoleküls (3) der Reihe nach über die Akzeptormoleküle (4) bewirkt, dass die Akzeptormoleküle (4) der Reihe nach Licht emittieren.

12. Verfahren nach Anspruch 10 oder Anspruch 11, bei welchem das Molekül der ersten Art (3) auf einem Substrat (6) getragen wird und das Bewegen ein Bewegen des Substrats (6) aufweist, um das Molekül der ersten Art (3) der Reihe nach über die Moleküle der zweiten Art (4) zu bewegen.

13. Verfahren nach Anspruch 12, bei welchem das Substrat (6) durch eine auf das Substrat (6) einfallende Schallwelle (8) bewegt wird.

14. Verfahren nach Anspruch 12 oder Anspruch 13, bei welchem das Substrat (6) elastisch verformbar ist und zwei gegenüberliegende Kanten (10) des Substrats (6) gegen eine Bewegung im Wandler (1) derart befestigt sind, dass die Bewegung des Substrats (6) eine hin- und hergehende, den Körper des Substrats (6) hin- und herbiegende ist.

15. Verfahren nach einem der Ansprüche 10 bis 14, bei welchem mehrere Moleküle der ersten Art (3) der Reihe nach über Moleküle der zweiten Art (4) bewegt werden.

## Revendications

1. Transducteur (1) pour convertir de l'énergie mécanique en énergie lumineuse, le transducteur (1) comprenant :
au moins une molécule d'un premier type (3) ; et
au moins une molécule d'un deuxième type (4) ;
les molécules des premier et deuxième types (3, 4) étant capables de transfert d'énergie selon le transfert d'énergie par résonance de Förster, l'une des molécules du premier type et du deuxième type étant une molécule donneuse (3) et l'autre des molécules du premier type et du deuxième type étant une molécule acceptrice (4),
**caractérisé en ce que** :
le transducteur (1) comprend une pluralité de molécules du deuxième type (4), les molécules du deuxième type (4) étant espacées les unes des autres ; et
le transducteur (1) est agencé de sorte que la molécule du premier type (3) est mobile à travers les molécules du deuxième type (4) en séquence de manière à permettre un transfert d'énergie selon le transfert d'énergie par résonance de Förster entre la molécule du premier type (3) et les molécules du deuxième type (4) en séquence, permettant ainsi à la ou les molécule(s) acceptrice(s) d'émettre de la lumière.

2. Transducteur (1) selon la revendication 1, dans lequel le premier type de molécule est une molécule donneuse (3) et le deuxième type de molécule est une molécule acceptrice (4), moyennant quoi le déplacement de la molécule donneuse (3) à travers les molécules acceptrices (4) en séquence permet aux molécules acceptrices (4) d'émettre de la lumière en séquence.

3. Transducteur (1) selon la revendication 1 ou 2, comprenant un substrat (6) sur lequel la molécule du premier type (3) est portée, le substrat (6) étant mobile de manière à déplacer la molécule du premier type (3) à travers les molécules du deuxième type (4) en séquence.

4. Transducteur (1) selon la revendication 3, dans lequel le substrat (6) est élastiquement déformable.

5. Transducteur (1) selon la revendication 4, dans lequel deux bords opposés (10) du substrat (6) sont fixes à l'encontre du mouvement dans le transducteur (1), de sorte que le mouvement du substrat (6) est un mouvement de va-et-vient alternatif et courbé du corps du substrat (6).

6. Transducteur (1) selon l'une quelconque des revendications 3 à 5, dans lequel le transducteur (1) comprend un boîtier (2) dans lequel le substrat (6) est situé, le boîtier (2) ayant une ouverture (7) destinée à admettre une onde de pression (8) qui, en utilisation, entraîne le mouvement de la molécule du premier type (3).

7. Transducteur (1) selon la revendication 6, le boîtier (2) comprenant au moins une fenêtre (9) destinée à admettre de la lumière servant à exciter la ou chaque molécule donneuse (3).

8. Transducteur (1) selon la revendication 6 ou 7, le boîtier (2) comprenant au moins une fenêtre (10) destinée à permettre à de la lumière générée par la ou chaque molécule acceptrice (4) de sortir du boîtier (2).

9. Transducteur (1) selon l'une quelconque des revendications 1 à 8, comprenant plusieurs molécules du premier type (3).

10. Procédé de conversion d'énergie mécanique en énergie lumineuse, le procédé consistant à :
déplacer une molécule d'un premier type (3) à travers des molécules d'un deuxième type (4) en séquence, les molécules des premier et deuxième types (3, 4) étant capables de transfert d'énergie selon le transfert d'énergie par résonance de Förster, dans lequel l'une des molécules du premier type et du deuxième type est une molécule donneuse (3) et l'autre molécule du premier type et du deuxième type est une molécule acceptrice (4), et dans lequel les molécules du deuxième type (4) sont espacées les unes des autres, moyennant quoi le déplacement de la molécule du premier type (3) déplace la molécule du premier type (3) à travers les molécules du deuxième type (4) en séquence de manière à permettre un transfert d'énergie selon le transfert d'énergie par résonance de Förster entre la molécule du premier type (3) et les molécules du deuxième type (4) en séquence, permettant ainsi à la ou les molécule(s) acceptrice(s) d'émettre de la lumière.

11. Procédé selon la revendication 10, dans lequel le premier type de molécule est une molécule donneuse (3) et le deuxième type de molécule est une molécule acceptrice (4), moyennant quoi le déplacement de la molécule donneuse (3) à travers les molécules acceptrices (4) en séquence permet aux molécules acceptrices (4) d'émettre de la lumière en séquence.

12. Procédé selon la revendication 10 ou 11, dans lequel la molécule du premier type (3) est portée sur un substrat (6) et le déplacement consiste à déplacer le substrat (6) de manière à déplacer la molécule du premier type (3) à travers les molécules du deuxième type (4) en séquence.

13. Procédé selon la revendication 12, dans lequel le substrat (6) est déplacé par une onde sonore (8) incidente sur le substrat (6).

14. Procédé selon la revendication 12 ou 13, dans lequel le substrat (6) est élastiquement déformable et deux bords opposés (10) du substrat (6) sont fixes à l'encontre du mouvement dans le transducteur (1), de sorte que le mouvement du substrat (6) est un mouvement de va-et-vient alternatif et courbé du corps du substrat (6).

15. Procédé selon l'une quelconque des revendications 10 à 14, dans lequel plusieurs molécules du premier type (3) sont déplacées à travers des molécules du deuxième type (4) en séquence.
